# EUROPEAN PATENT APPLICATION

(11) **EP 1 247 619 A2**
(43) Date of publication of application: **09.10.2002**
(21) Application number: 02007487.8
(22) Date of filing: 02.04.2002
(51) Int. Cl.: B25B 11/00

(54) **Device for the positioning and blocking of pieces on wood working machines and relative machine**

(30) Priority: 06.04.2001 IT MI010750
(71) Applicant: Uniteam S.p.A., 36016 Thiene (VI) (IT)
(72) Inventor: Marchioro, Sante, 36016 Thiene (VI) (IT)
(74) Representative: Savi, Alberto

(57) **Abstract**

The invention refers to a positioning and blocking device of pieces, especially for wood working machines including a series of supports which can be positioned and blocked along a work top, wherein at least some of the aforementioned supports have a housing aimed at holding interchangeable blocking devices of the piece to be worked, locking and activation means of said devices being provided for.

Said blocking means may be of a suction type (6) which are inserted with a cylindrical part (9) into a housing (4) of the first support (3), creating an air seal and blocking the piece being worked due to a vacuum effect created by a pneumatic vacuum-operated system that creates a vacuum within said suction cap (6), or may be of a vice kind (7) which are inserted with a cylindrical part (9') into a housing (4) of the first support (3), creating an air seal, and they clamp the piece being worked against the machine bed due to the effect of pressure created by a pneumatic system that acts on a piston (15') which is integral with said vices, which are subsequently attracted towards the machine bed.

## Description

The invention refers to a positioning and blocking device of pieces being worked especially for wood working machines, as well as a machine fitted with a number of the aforementioned devices.

For the positioning of the pieces to be worked on the machine tools the known technique provides for manual layout of pivots against which these pieces should beat, which will then be fixed in various ways, according to their shape.

For the blocking, for example in the case of tops or pieces that have a substantially flat and extensive surface such as a door or similar objects, the known technique includes the use of suction cups connected with a vacuum-operated system. This means of fixing is particularly practical and effective as it is sufficient to act on just one valve, in order to put the suction cups in a vacuum and to block firmly the piece to be worked.

If the pieces to be worked are strips, the known techniques provide for the use of pneumatic jacks to be placed on the machine bed, as the aforesaid jacks are connected, through unions, with a compressed air system. Said method of fixing is particularly effective as the thrust that can be achieved with said devices, as small as it may be, is rather intense.

The present invention relates to this field and proposes a device with an interchangeable operative part, which uses both suction cups and vices, both of which are activated by the same pneumatic system, vacuum-operated or under pressure, according to the type of use provided for.

The aforesaid suction cups and vices are mounted onto numerous supports, which can be positioned according to requirements on the machine bed, through the use of suitable guides.

The invention is described here below with reference to the drawings attached, in which:
- drawing 1 illustrates a machine bed for wood working with the positioning and blocking of the means highlighted,
- drawing 2 illustrates the support on which the blocking means are mounted,
- drawings 3 and 4 illustrate, in section, said blocking means.

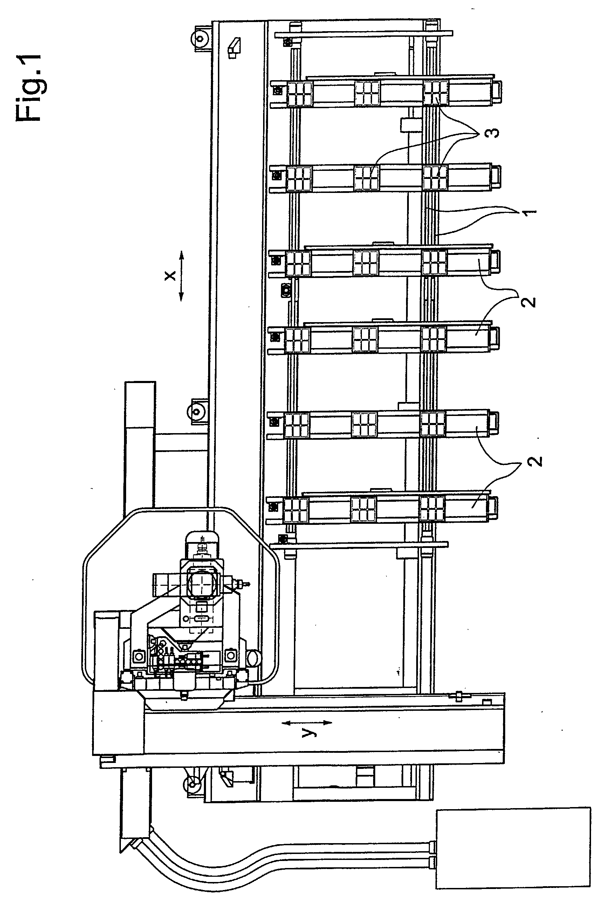

In a wood working machine the work surface has a pair of guides (1) (drawing 1) upon which numerous crosspieces are mounted (2), each of which holds one or more first supports (3), the aforementioned first supports being apt to hold the blocking means suitable to support a piece being worked such as, as a pure example but not restrictive, a wooden top or a section for frames, or a comparison for positioning of the pieces.

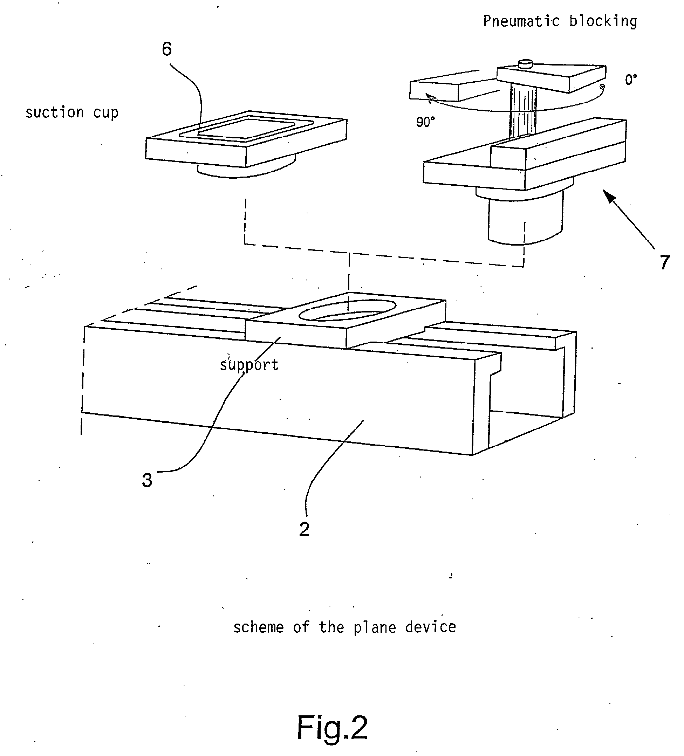

The aforementioned blocking means include suction cups (6) and vice devices (7), said suction cups (6) and said vice devices (7) being interchangeable (drawing 2).

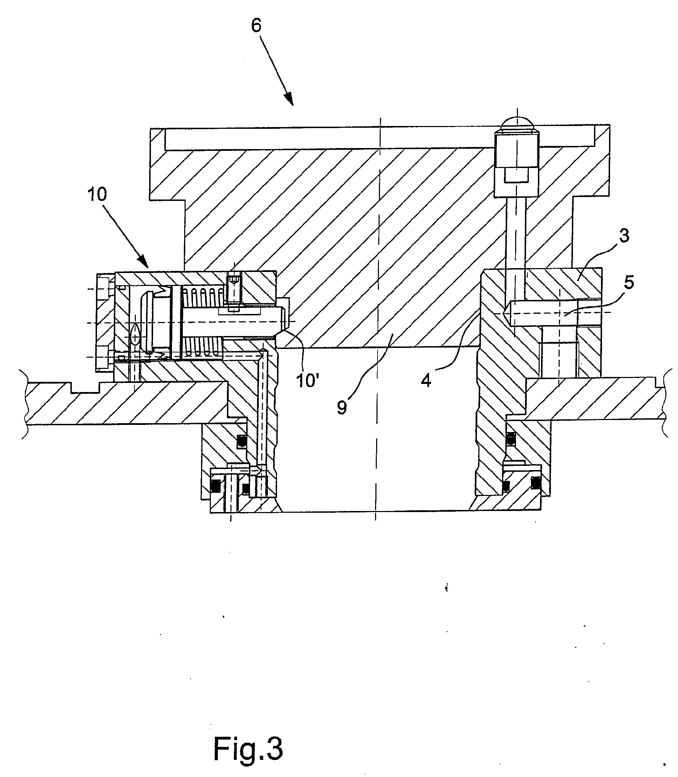

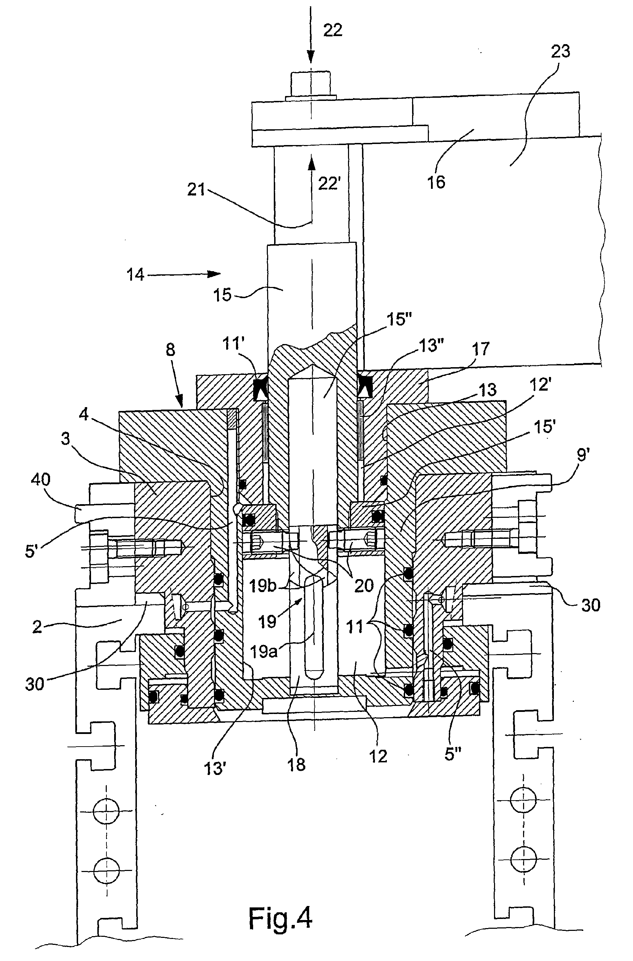

Each of the aforementioned first supports (3) includes a cylindrical housing (4) aimed at holding said blocking means (6) and (7) which will then be fixed through the use of a known device (10) such as, for example, a vacuum control taper pin or similar, the aforementioned first support (3) being connected with a pneumatic vacuum-operated system, not represented, through a conduit (5) (drawing 3) and with a pneumatic pressure system, not represented, through conduits (5') and (5") (drawing 4).

For simplicity drawing 3 illustrates the sole conduit (5) while drawing 4 illustrates the sole conduits (5') and (5").

The conduits under pressure (5') and (5") are functionally excluded when a suction device (6) is mounted onto the first support (3), while the vacuum-operated conduit (5) is functionally excluded when a vice device (7) is mounted onto the first support (3).

The interchangeability between the suction cups (6) and the vice devices (7) is guaranteed by the fact that both of the aforementioned devices include a cylindrical part that is inserted into a housing (4) of the first support (3) creating an air seal thanks to a specific washer.

Drawing 3 illustrates a suction cup (6) which is inserted with the aforementioned cylindrical part (9) into the said housing (4) of a first support (3) and the aforementioned suction cups (6) are blocked inside the housing (4) using known means such as, for example, a pneumatic control pin device (10) that engages a housing (10') cut from the cylindrical part (9) of the aforementioned suction cup blocking means (6).

Drawing 4 illustrates, in detail, one of the aforementioned vice devices (7) mounted onto one of the said first supports (3).

Each of the said vice devices (7) includes a second support (8) that is inserted with its cylindrical part (9') into the aforementioned cylindrical housing (4) of the said first support (3), the coupling between the said cylindrical part (9') and the said cylindrical housing (4) being air tight, thanks to washers (11), and being blocked inside the aforementioned housing (4) with known means such as, for example, the pneumatic control device (10) illustrated in drawing 3.

Said device (10) is not shown in drawing 4 as the section illustrated is achieved through a vertical plane rotated by 90°, compared with the one with which the section of drawing 3 has been made.

The aforementioned second support (8) includes:
- a cylindrical housing (13), in which a bush (17) is inserted ,
- a rectified cylindrical housing (13') coaxial according to the same axle (21) with said housing (13),
- a pin (18), integral with the second support (8) and coaxial with said housing (13') according to the same axle (21), from which two slots are cut (19), both including a straight part (19a) and parallel to the axle (21) and a helical part (19b) that extends over a 90° arch and joins up with the aforementioned straight part (19a).

A ferrule (13") is inserted within the aforementioned bush (17) and coaxial according to the axle (21) which, together with the cylindrical housing (13'), constitutes a guide within which a vice (14) slides, said ferrule (13") being integral, through the bush (17), to the second support (8).

Said vice (14) includes:
- a cylindrical support (15) with a cylindrical cavity (15") inside, said cavity being coaxial with said cylindrical part (15) according to the same axle (21) and said cavity being of the same diameter or of a larger diameter than that of the pin (18),
- an annular part, or piston, (15'), coaxial according to the same axle (21) with the aforementioned cylindrical part (15) and integral with the same, two pins (20) being provided, that engage said slots (19), protruding from the internal surface of said piston,
- a jaw (16) substantially perpendicular to the axle (21) and integral with the cylindrical part (15).

The couplings between the surface of the cylinder (15) and the ferrule (13"), through the washer (11'), and between the external surface of the piston (15') and the rectified cylindrical housing (13') are sliding and air sealed in such a way that:
- when through said conduit (5") a pressure is applied to a chamber (12), placed within the housing (13') and delimited at the top by the cylinder (15) and piston (15') and at the bottom by the bottom of the second support (8), said cylinder (15) is pushed upwards in the direction indicated by the arrow (22'),
- when through said conduit (5') pressure in an annular chamber (12') is applied between the cylindrical support (15) and the bush (17), said cylinder (15) is pushed downwards, moving in the direction indicated by the arrow (22), in such a way that the jaw (16) blocks a piece to be worked (23) against the machine bed.

During movement indicated by the arrow (22), the pins (20) engage first of all the corresponding helical parts (19b) of the slots (19) and then the straight parts (19a) of the same slot (19), therefore the vice (14) will carry out the first part of the stroke according to the arrow (22) by rotating 90°, following which it will proceed without any further rotation and will stop when the jaw (16) of said vice (14) blocks the piece being worked (23).

Obviously when the vice moves in the direction indicated by the arrow (22') in order to release the piece being worked, said vice will move initially linearly and will then rotate 90° so as not to obstruct removal of the worked piece from the machine.

According to another preferred form of execution, the supports (3) may hold devices such as pins or other similar objects, to be used if it is necessary to place various pieces on the work surface which are too small for being positioned using the fixed devices normally found alongside the work top.

With this objective one or more series of milled slots are provided in the crosspieces (2), with the slots of each series lined up along the axle X, in which slots the corresponding couplings on each of the supports (3) are inserted, with the objective of assuring the perfect alignment of the latter.

These supports can be seen in drawing 4, indicated with number (40) and they are mounted onto the casing (3) with the possibility of limited shifting in a vertical direction to move from a raised position (illustrated on the right hand side in drawing 4, in which these couplings remain outside of the slots (30) therefore allowing for the support (3) to run along the crosspieces (2)) to a lowered position (illustrated on the left hand side in drawing 4, in which these couplings are inserted within the slots (30), to block the supports (3) in a well defined position).

Preferably the slots (30) will be made using the same machine along which the supports (3) are mounted, with the tool sliding along the axle X.

In this way it is possible to perfectly align the supports (3) on the crosspieces (2) along one or more parallel lines and if elements such as pins or similar elements are inserted within the support housings (3), one or more rows of perfectly lined pins will be achieved along the work top, capable of acting as a positioning device for other strips or other elements to be worked.

An initial advantage of the device according to the invention consists in the fact that the machine bed is free from inconvenient connections for activation of the pneumatic blocking devices.

Another advantage is a consequence of the fact that the vice, when it is lifted to release the piece, rotates 90° and therefore the jaw (16) does not obstruct removal of the piece worked from the machine.

## Claims

1. A workpiece and blocking device wood working machines, including a series of supports which can be positioned and blocked along a work top, **characterised by** the fact that at least some of the aforementioned supports have a housing aimed at holding interchangeable blocking devices of the piece to be worked, locking and activation means of said devices being provided for.

2. The workpiece support and blocking device wood working machines according to clam 1, **characterised by** the fact that said fixing means are of a pneumatic kind.

3. The workpiece and blocking device for wood working machines according to claim 2, **characterised by** the fact that said interchangeable blocking devices of the piece include suction devices.

4. The workpiece and blocking device for wood working machines according to claim 2, **characterised by** the fact that said interchangeable devices for blocking the piece include vice devices.

5. The workpiece and blocking device for wood working machines according to claim 2, **characterised by** the fact that said interchangeable devices for positioning of the piece include jig locators.

6. The workpiece and blocking device for wood working machines according to claim 2, **characterised by** the fact that said blocking means of a pneumatic type are vacuum-operated.

7. The workpiece and blocking device for wood working machines according to claim 2, **characterised by** the fact that said blocking means of a pneumatic type are under pressure.

8. The device according to claim 7, **characterised by** the fact that said blocking means are of a suction type (6) which are inserted with a cylindrical part (9) into a housing (4) of the first support (3), creating an air seal and blocking the piece being worked due to a vacuum effect created by a pneumatic vacuum-operated system that creates a vacuum within said suction cap (6).

9. The device according to claim 3 **characterised by** the fact that said means of blocking are of a vice kind (7) which are inserted with a cylindrical part (9') into a housing (4) of the first support (3), creating an air seal, and they clamp the piece being worked against the machine bed due to the effect of pressure created by a pneumatic system that acts on a piston (15') which is integral with said vices, which are subsequently attracted towards the machine bed.

10. The device according to claims 8 and 9, **characterised by** the fact that the aforementioned first support (3) includes a cylindrical housing (4), aimed at receiving said blocking means (6) and (7), creating an air seal coupling.

11. The device according to claim 9 **characterised by** the fact that said vice device (7) includes:
• a second support (8) that is inserted with a cylindrical part (9') into a housing (4) of the first support (3) creating an air seal,
• a vice (14) that includes a cylindrical part (15), a piston (15') sturdily connected to the aforementioned cylindrical part (15), a recess (15") cut from the inside of the said cylindrical part (15) and a jaw (16) sturdily connected in square to said cylindrical part (15).

12. The device according to claim 11, **characterised by** the fact that said piston (15') of said vice (14) creates a sliding coupling and an air seal with a cylindrical housing (13') of the second support (8).

13. The device according to claim 11, **characterised by** the fact that said cylindrical part (15) of said vice (14) creates a sliding coupling and an air seal with a ferrule (13") integral with the second support (8).

14. The device according to claims 11 to 13 **characterised by** the fact that one or more pins (20) protrude from the internal surface of the piston (15'), said pins engaging one or more of the slots (19) cut from an integral part of the second support (8).

15. The device according to claim 10 to 12, **characterised by** the fact that said slot (19), cut from said integral part on the second support (8) includes a straight part (19a) which is parallel to the axle (21) of the aforementioned cylindrical part (15), which connects with a helical part (19b).
